# EUROPÄISCHE PATENTSCHRIFT

(11) **EP 2 418 476 B1**
(45) Veröffentlichungstag und Bekanntmachung des Hinweises auf die Patenterteilung: **20.05.2015**
(21) Anmeldenummer: 11006443.3
(22) Anmeldetag: 04.08.2011
(51) Int. Cl.: G01N 23/06, G01N 23/18

(54) **Verfahren zur filmlosen Durchstrahlungsprüfung von Bauteilen**
Method for film-free radiographic testing of components
Procédé de vérification d'une radiographie de composants sans film

(30) Priorität: 09.08.2010 DE 102010033760
(43) Veröffentlichungstag der Anmeldung: 15.02.2012
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE); Geitner, Josef, 14532 Stahnsdorf (DE)
(74) Vertreter: Schaeberle, Steffen

(56) Entgegenhaltungen:
- WO-A1-88/08530
- WO-A2-01/63236
- DE-A1- 10 238 579
- GB-A- 2 141 822
- US-A- 5 289 267
- US-B1- 6 370 223
- DOMINGO MERY ET AL: "Automated Flaw Detection in Aluminum Castings Based on the Tracking of Potential Defects in a Radioscopic Image Sequence", IEEE TRANSACTIONS ON ROBOTICS AND AUTOMATION, IEEE INC, NEW YORK, US, Bd. 18, Nr. 6, 1. Dezember 2002 (2002-12-01), XP011079576, ISSN: 1042-296X
- MERY D. AND T. JAEGER: "Automatische Gussfehlererkennung: Stand der Technik", TECHNISCHES MESSEN, Bd. 68, Nr. 7-8, Juli 2001 (2001-07), Seiten 338-349, XP002660769,

## Beschreibung

Die Erfindung betrifft ein Verfahren zur filmlosen Durchstrahlungsprüfung von Bauteilen mittels Röntgenstrahlen auf der Grundlage einer durch innere Materialfehler unterschiedlichen Strahlungsabsorption und Intensität der nach der Durchstrahlung des Bauteils von einem digitalen Röntgenstrahldetektor detektierten Strahlung, wobei die digitalisierten Strahlungssignale in einem Computer verarbeitet werden und auf einem Bildschirm ein digitalisiertes Röntgenbild erzeugen.

Die Durchstrahlungsprüfung mittels digitaler Röntgentechnik ist ein bildgebendes Verfahren zur zerstörungsfreien Werkstoffprüfung, bei dem ein zu prüfendes Bauteil mit von einer Röntgenröhre erzeugten Röntgenstrahlen durchstrahlt wird und die Röntgenstrahlen nach der Durchstrahlung des Bauteils von einer Röntgenkamera (Röntgenstrahldetektor) erfasst werden. Bei der Bewegung der Röntgenstrahlquelle und der Röntgenkamera relativ zu dem Bauteil (oder umgekehrt) wird das Signal des Röntgenstrahldetektors permanent ausgelesen und in einem Computer verarbeitet und digitalisiert, um auf einem mit dem Computer verbundenen Bildschirm ein digitales Röntgenbild des untersuchten Werkstücks darzustellen. Aufgrund unterschiedlicher Strahlungsabsorption und entsprechend unterschiedlicher Strahlungsschwächung können in dem Bauteil vorhandene Fehlstellen, Einschlüsse, Seigerungen, Gasblasen, Risse oder Fügungsfehler in Form einer durch die größere Strahlungsintensität bedingten stärkeren Schwärzung auf dem Bildschirm erkennbar gemacht werden.

GB 2 141 822 offenbart ein Verfahren zur Durchstrahlungsprüfung von Bauteilen mittels Röntgenstrahlen zur Detektion von Hohlräumen in dem die gemessenen Strahlungsintensitäten aufgrund der gemessenen Breite normiert werden.

WO 01/63236 und Mery D., Automated Flaw Detection in Aluminium Castings Based on the Tracking of Potential Defects in a Radioscopic Image Sequence, IEEE Transactions on Robotics and Automation, Vol. 18(6), p. 890-901 (2002) offenbaren ein Verfahren zur automatischen Gussfehlererkennung in einem Prüfling mittels Röntgenstrahlen wobei hypothetische Gussfehler in Röntgenbildern identifiziert werden und als echte Gussfehler anerkannt werden, wenn die hypothetischen Gussfehler in einer realen Röntgenbildsequenz des Prüflings präsent sind.

US 6 370 223 offenbart ein Verfahren zur Durchstrahlungsprüfung von Lebensmitteln mittels Röntgenstrahlen zur Detektion von Fremdkörpern wobei die Oberflächentopographie des Lebensmittels erfasst wird und die gemessenen Strahlungsintensitäten aufgrund der gemessenen Topographie normiert werden.

Die Erkennbarkeit von Materialfehlern wird durch eine Randunschärfe, das heißt ein rings um die Fehlerstelle vorhandenes Halbschattengebiet, und einen geringen Kontrast (Schwärzungsunterschied), die durch eine Streustrahlung der auf eine unregelmäßige Bauteiloberfläche auftreffenden elektromagnetischen Wellen bedingt sein können, verringert. Eine unregelmäßige Oberflächenstruktur des zu untersuchenden Bauteils, beispielsweise in Form von Oberflächenporen, führt jedoch in erster Linie zu verminderter Strahlungsabsorption und dementsprechend hoher Strahlungsintensität. Die dadurch auf dem Bildschirm erzeugten Schwärzungen stellen jedoch keine relevanten Materialfehler dar, sondern verfälschen vielmehr das Prüfungsergebnis bzw. lassen eine exakte Erkennung von Materialfehlern auf dem Bildschirm bzw. eine sichere automatische Auswertung der Röntgenbilder nicht zu.

Der Erfindung liegt die Aufgabe zugrunde, ein Verfahren zur Durchstrahlungsprüfung von Bauteilen mit digitaler Röntgentechnik anzugeben, das eine sichere Erkennung von in dem Bauteilmaterial vorhandenen Fehlstellen gewährleistet.

Erfindungsgemäß wird die Aufgabe mit einem Verfahren gemäß den Merkmalen des Patentanspruchs 1 gelöst.

Vorteilhafte Weiterbildungen und zweckmäßige Ausgestaltungen der Erfindung sind Gegenstand der Unteransprüche.

Die Durchstrahlungsprüfung von Bauteilen mittels Röntgenstrahlen erfolgt auf der Grundlage einer durch Materialfehler im Bauteil veränderten Strahlungsabsorption und Intensität der nach der Durchstrahlung des Bauteils von einem Röntgendetektor bzw. einer Röntgenkamera erfassten Strahlungssignale, die nach Digitalisierung und Auswertung in einem Computer ein digitales Röntgenbild mit unterschiedlichen Graustufen auf einem Bildschirm erzeugen. Der Kern der Erfindung besteht darin, dass eine unebene, ebenfalls unterschiedliche Strahlungsintensitäten bewirkende Oberflächentopographie des Bauteils, die eine automatische Auswertung des Röntgenbildes und das sichere Auffinden von Materialfehlern erschwert, mit einer digitalen Glättungsschicht überlagert wird und rein rechnerisch geglättet wird, so dass eine Verringerung der Strahlungsabsorption oder eine Erhöhung der Strahlungsintensität aufgrund einer unebenen Oberflächentopographie ausgeglichen und nur eine durch innere Materialfehler bedingte Schwärzung in dem digitalen Röntgenbild dargestellt wird. Dadurch ist eine exakte, durch Oberflächenunebenheiten unbeeinflusste automatisierte Durchstrahlungsprüfung möglich, die insbesondere bei sicherheitsrelevanten Bauteilen von ausschlaggebender Bedeutung ist.

Die Erzeugung der digitalen Glättungsschicht erfolgt in der Weise, dass parallel zu der Röntgenstrahldetektion mit der digitalen Röntgenkamera die Oberfläche des zu untersuchenden Bauteils mit einem digitalen Röntgenscanner oder Laserscanner abgetastet wird und im Computer den digitalen Signalen der Röntgenkamera die digitalen Oberflächenabtastsignale des Scanners überlagert werden. Das heißt, die vom Scanner erfassten reinen Oberflächentopographiesignale werden im Computer aus der Gesamtheit der von der digitalen Röntgenkamera detektierten Röntgensignale herausgerechnet, so dass auf dem Bildschirm das digitale Röntgenbild eines Bauteils mit glatter ebener Oberfläche wiedergegeben wird und Materialfehler im Bauteil wie Fehlstellen, Einschlüsse, Seigerungen, Gasblasen, Risse oder Fügungsfehler auch bei automatischer Auswertung der digitalen Röntgenbilder sicher erkannt werden.

Ein Ausführungsbeispiel der Erfindung wird nachfolgend anhand der Zeichnung, in der
- Fig. 1: ein Bauteil mit virtueller Glättungsschicht (3D-Element) während der Durchstrahlungsprüfung;
- Fig. 2: den Schwärzungsverlauf ohne Glättungsschicht;
- Fig. 3: den Schwärzungsverlauf mit virtueller Glättungsschicht
zeigt, näher erläutert.

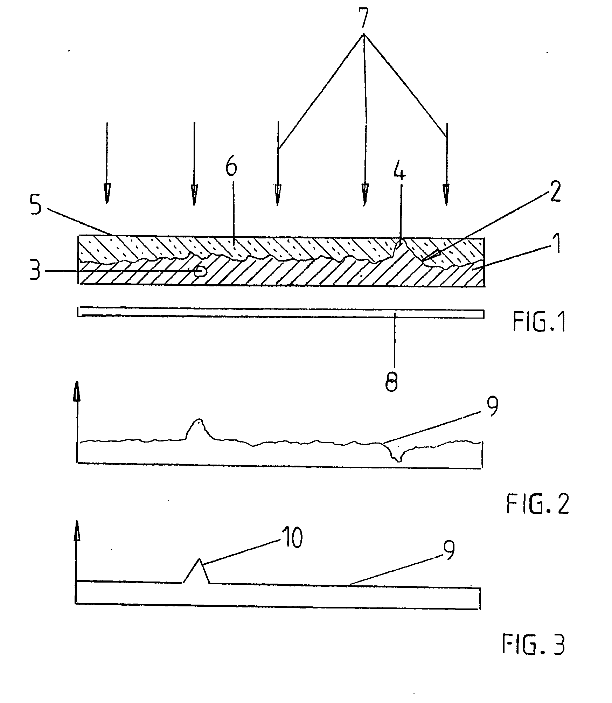

Ein beispielhaft aus 18.8-Chrom-Nickel-Stahl bestehendes Bauteil 1 weist eine unebene Oberflächengeometrie 2 und im Innern des zu prüfenden Werkstücks zu erwartende Fehler 3 auf. Zunächst wird die Oberflächengeometrie 2 des Bauteils 1 mit einem Messgerät, hier einem Laserscanner (nicht dargestellt), ausgemessen und auf der Basis der höchsten ermittelten Erhebung 4 eine virtuell geglättete Oberfläche 5 numerisch definiert. Das dabei zwischen der glatten virtuellen Oberfläche 5 und der unebenen tatsächlichen Oberflächengeometrie 2 entstehende komplementäre 3D-Element 6 (virtuelle Glättungsschicht) wird mit einer auf den Bauteilwerkstoff abgestimmten spezifischen Röntgenstrahlabsorptionskoeffizienten ergänzt. Anschließend wird das Bauteil 1 mit digitaler Röntgentechnik, das heißt filmlos mit einer von einer Röntgenröhre erzeugten Röntgenstrahlen 7 und einem die das Bauteil 1 durchdringenden Röntgenstrahlen 7 detektierenden Röntgenstrahldetektor 8 (digitale Röntgenkamera) untersucht. Im Computer (nicht dargestellt) werden die vom Röntgenstrahldetektor 8 erzeugten digitalen Strahlungssignale mit dem auf der Basis der digitalen Oberflächenmesssignale des Laserscanners erzeugten 3D-Element 6 mit virtueller Oberfläche 5 überlagert, so dass auf einem an den Computer angeschlossenen Bildschirm (nicht dargestellt) nur noch ein auf der Basis einer virtuellen glatten Oberfläche 5 erzeugtes, von einer unebenen Oberflächenstruktur unabhängiges Röntgenbild 9 mit einer visuell oder automatisiert leicht erkennbaren Schwärzungsspitze 10 (Fig. 3) zur Anzeige eines in dem Bauteil 1 vorhandenen Fehlers 3 dargestellt wird. Fig. 2 zeigt den unscharfen Schwärzungsverlauf ohne virtuelle Oberflächenglättung.

### Bezugszeichenliste

- 1: Bauteil
- 2: unebene Oberflächengeometrie
- 3: innerer Fehler
- 4: höchste Erhebung von 2
- 5: virtuell geglättete Oberfläche
- 6: 3D-Element, virtuelle Glättungsschicht
- 7: Röntgenstrahlen
- 8: Röntgenstrahldetektor
- 9: Röntgenbild, Schwärzungsverlauf
- 10: Schwärzungsspitze

## Patentansprüche

1. Verfahren zur filmlosen Durchstrahlungsprüfung von Bauteilen mittels Röntgenstrahlen auf der Grundlage einer durch innere Materialfehler unterschiedlichen Strahlungsabsorption und Intensität der nach der Durchstrahlung des Bauteils von einem digitalen Röntgenstrahldetektor detektierten Strahlung,
wobei die digitalisierten Strahlungssignale in einem Computer verarbeitet werden und auf einem Bildschirm ein digitalisiertes Röntgenbild erzeugen,
wobei zunächst die Oberflächentopographie (2) des Bauteils (1) digital erfasst wird,
**dadurch gekennzeichnet**
**dass** mit den digitalisierten Oberflächenmesssignalen eine durch die höchste Oberflächenerhebung (4) bestimmte, virtuell geglättete Oberfläche (5) durch Bildung eines komplementären 3D-Elements (6) numerisch definiert wird, dass das zwischen der virtuellen Oberfläche (5) und der tatsächlichen Bauteiloberfläche entstehende komplementäre 3D-Element (6) mit einem für den jeweiligen Bauteilwerkstoff spezifischen Röntgenstrahlabsorptionskoeffizienten ergänzt wird, und
**dass** die digitalen Daten der dem 3D-Element (6) entsprechenden virtuellen Glättungsschicht den digitalen Strahlungssignalen des Röntgenstrahldetektors (8) überlagert werden,
um ein im Schwärzungsverlauf von der Oberflächengeometrie (2) des Bauteils (1) unbeeinflusstes Röntgenbild (9) zu erzeugen.

2. Verfahren nach Anspruch 1, wobei die Detektion der das Bauteil durchdringenden Röntgenstrahlen (7) mit einer digitalen Röntgenkamera erfolgt.

3. Verfahren nach Anspruch 1, wobei das Ausmessen der Oberflächengeometrie des Bauteils mit einem Laserscanner oder mit einer Röntgenkamera erfolgt.

4. Verfahren nach einem der vorhergehenden Ansprüche, wobei Materialfehler wie Fehlstellen, Einschlüsse, Seigerungen, Gasblasen, Risse oder Fügungsfehler visuell oder automatisiert erfasst werden.

## Claims

1. Method for filmless radiographic inspection of components by means of X-rays on the basis of a difference in absorption and intensity, due to internal material defects, of the radiation detected by a digital X-ray detector after the radiography of the component,
where the digitized radiation signals are processed in a computer and generate a digitized X-ray image on a monitor,
where first the surface topography (2) of the component (1) is digitally recorded,
**characterized in that**
using the digitized surface measurement signals, a virtually smoothened surface (5) determined by the highest peak (4) is numerically defined by creating a complementary 3D element (6),
that the complementary 3D element (6) formed between the virtual surface (5) and the actual component surface is supplemented by an X-ray absorption coefficient specific to the respective component material, and that the digital radiation signals of the X-ray detector (8) are superimposed with the digital data of the virtual smoothening layer corresponding to the 3D element (6),
in order to produce an X-ray image (9) with a density curve not affected by the surface geometry (2) of the component (1).

2. Method in accordance with Claim 1, where the X-rays (7) penetrating the component are detected by a digital X-ray camera.

3. Method in accordance with Claim 1, where the surface geometry of the component is measured by means of a laser scanner or an X-ray camera.

4. Method in accordance with one of the preceding Claims, where material defects such as voids, inclusions, segregations, gas bubbles, cracks or bonding defects are detected visually or automatically.

## Revendications

1. Procédé destiné au contrôle radiographique sans film de composants au moyen de rayons X sur la base d'une différence d'absorption et d'intensité, due à des vices de matière internes, du rayonnement détecté par un détecteur numérique de rayons X après la radioexposition du composant,
procédé dans lequel les signaux de rayonnement numérisés sont traités dans un ordinateur et génèrent sur un écran une radiographie numérisée,
sachant qu'est tout d'abord saisie numériquement la topographie superficielle (2) du composant (1),
**caractérisé en ce**
**qu'**avec les signaux de mesure de surface numérisés est définie numériquement une surface (5) virtuellement lissée, déterminée par la plus haute pointe (4), au moyen de la formation d'un élément 3D (6) complémentaire,
**que** l'élément 3D (6) complémentaire formé entre la surface virtuelle (5) et la surface effective du composant est complété par un coefficient d'absorption de rayons X spécifique au matériau respectif du composant, et
**que** les données numériques de la couche de lissage virtuelle correspondant à l'élément 3D (6) sont superposées aux signaux de rayonnement numériques du détecteur de rayons X (8),
afin de générer une radiographie (9) avec une courbe de densité non influencée par la géométrie superficielle (2) du composant (1).

2. Procédé selon la revendication n° 1, dans lequel la détection des rayons X (7) traversant le composant est effectuée avec une caméra numérique à rayons X.

3. Procédé selon la revendication n° 1, dans lequel le mesurage de la géométrie superficielle du composant est effectué avec un scanneur à laser ou avec une caméra à rayons X.

4. Procédé selon une des revendications précédentes, dans lequel des vices de matière tels que lacunes, inclusions, ségrégations, piqûres de gaz, criques ou défauts d'assemblage sont détectés visuellement ou de manière automatisée.
